# EUROPÄISCHE PATENTSCHRIFT

(11) **EP 1 198 648 B1**
(45) Veröffentlichungstag und Bekanntmachung des Hinweises auf die Patenterteilung: **11.02.2004**
(21) Anmeldenummer: 00949339.6
(22) Anmeldetag: 14.07.2000
(51) Int. Cl.: E04F 13/08, F16B 13/08, E06B 3/54

(54) **BEFESTIGUNGSELEMENT FÜR DOPPELGLASPLATTEN**
FIXING ELEMENT FOR DOUBLE GLASS PLATES
ELEMENT DE FIXATION POUR PLAQUES DE DOUBLE VITRAGE

(30) Priorität: 29.07.1999 DE 29913278 U
(43) Veröffentlichungstag der Anmeldung: 24.04.2002
(73) Patentinhaber: fischerwerke Artur Fischer GmbH & Co. KG, 72178 Waldachtal (DE)
(72) Erfinder: LIND, Stefan, D-72178 Waldachtal (DE)
(86) Internationale Anmeldenummer: PCT/EP2000/006717
(87) Internationale Veröffentlichungsnummer: WO 2001/009459

(56) Entgegenhaltungen:
- EP-A- 0 439 706
- EP-A- 0 647 760
- DE-A- 4 011 229
- DE-C- 19 751 124

## Beschreibung

Die Erfindung betrifft ein Befestigungselement für Doppelglasplatten gemäß dem Oberbegriff des Anspruches 1.

Ein ähnliches Befestigungselement ist aus der EP-A-0 647 760 bekannt.

Aus der DE 40 11 229 ist ein Befestigungselement zur Verankerung in einer Fassadenplatte bekannt, das aus einem Gewindebolzen mit einem an seinem vorderen Ende angeordneten Spreizkonus besteht, auf den ein ringförmiges Spreizelement aufschiebbar ist. Um bei der Verankerung des Befestigungselementes in den dünnwandigen Fassadenplatten ein Ausbrechen des Bohrloches zu vermeiden, erfolgt die Verankerung in einem hinterschnittenen Bohrloch, das hohe Auszugsbelastungen bei nahezu spreizdruckfreier Verankerung ermöglicht.

Zur Zentrierung des Gewindebolzens im Bohrloch ist ein Distanzelement vorgesehen, das gleichzeitig das auf den Spreizkonus aufgeschobene Spreizelement gegen Verschieben sichert. Durch einen an der Außenfläche der Fassadenplatte aufsitzenden Flansch des Distanzelements wird beim Aufdrehen einer Mutter auf den Gewindebolzen eine Verspannung des Befestigungselements bewirkt, die das Befestigungselement zur Aufnahme von Querkräften abstützt.

Aufgrund der zur Abstützung des Befestigungselementes erforderlichen hohen Spannkraft einerseits und wegen der unmittelbaren Anlage des aus Metall bestehenden Spreizelements an der Bohrlochwandung andererseits ist das bekannte Befestigungselement für die Befestigung von Doppelglasplatten bspw. zur Verkleidung von Gebäuden nicht geeignet.

Der Erfindung liegt daher die Aufgabe zugrunde, ein Befestigungselement zu schaffen, das für Verankerungen in Glasplatten und deren Befestigung geeignet ist.

Die Lösung dieser Aufgabe wird durch die im Anspruch 1 angegebenen Merkmale erreicht.

Mit der aus weichem Kunststoff bestehenden und über die Stirnseite des Gewindebolzens und dem Spreizelement gestülpten Kappe wird ein direkter Kontakt des aus Stahl bestehenden Spreizelementes mit der Glasfläche vermieden. Die bspw. aus Polyurethan bestehende Kappe ist elastisch und/oder plastisch verformbar, so dass aus einer starren, unter Umständen zu einem Bruch des Glases führenden Punktbelastung eine weiche und Unebenheiten ausgleichende Flächenbelastung wird. Durch die sich daraus ergebende gleichmäßigere Druckverteilung auf eine größere Fläche lassen sich mit dem erfindungsgemäßen Befestigungselement auch in Glas hohe Belastungswerte erzielen.

Durch den in das Bohrloch der hinteren Glasplatte eingreifenden und das Spreizelement abstützenden Abschnitt entsteht an der Distanzhülse eine Schulter, die auf der hinteren Glasplatte ohne Druck auszuüben aufsitzt. Die Distanzhülse durchdringt vollständig die vordere Glasplatte, so dass beim Aufdrehen der Mutter zum Festsetzen des Befestigungselementes die Reaktionskraft über die Distanzhülse vollständig aufgefangen wird. Da weder auf die hintere noch auf die vordere Glasplatte Druckkräfte bei der Verankerung des Befestigungselementes einwirken, ist das erfindungsgemäße Befestigungselement für die Befestigung von Doppelglasplatten geeignet, bei denen die beiden Scheiben in einem Abstand zueinander angeordnet sind. Da die Distanzhülse über den in das Bohrloch der hinteren Glasplatte eingreifenden Abschnitt und mit seiner Mantelfläche im Bohrloch der vorderen Glasplatte abgestützt ist, übernimmt die Distanzhülse auch die Aufnahme der auf die Doppelglasplatte wirkenden Querkräfte.

In einer weiteren Ausgestaltung der Erfindung kann die Distanzhülse einen das Bohrloch der vorderen Glasplatte überdeckenden Flansch aufweisen. Der Abstand der Unterseite des Flansches zu der auf der hinteren Glasplatte aufsitzenden Schulter der Distanzhülse ist so gewählt, dass beim Verspannen des Befestigungselementes kein Druck auf die vordere Glasscheibe ausgeübt wird. Der Flansch dient lediglich zur zusätzlichen Abdichtung des Bohrloches der vorderen Glasscheibe und zur Vergrößerung der Auflagefläche für die Mutter. Zur Verbesserung der Abdichtung können an der Unterseite des Flansches ein oder mehrere ringförmige Dichtungsrippen angeordnet sein. Eine solche Abdichtung, die ggf. noch mit entsprechenden Dichtmitteln verbessert werden kann, ist insbesondere dann zweckmäßig, wenn das Befestigungselement für die Befestigung von Isoierglasplatten eingesetzt wird.

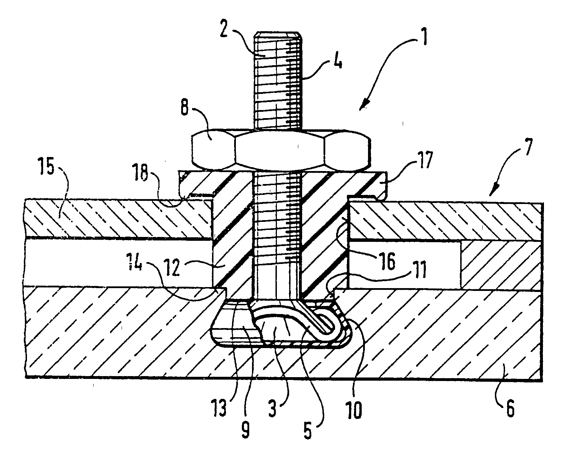

Die Erfindung wird nachfolgend anhand eines in der Zeichnung dargestellten Ausführungsbeispiels näher erläutert.

Das Befestigungselement 1 besteht aus einem Gewindebolzen 2 der an seinem vorderen Ende einen Spreizkonus 3 und an seinem hinteren Ende ein Gewinde 4 aufweist. Auf dem Spreizkonus 3 ist eine Spreizelement 5 angeordnet, das zur Verankerung des Befestigungselementes 1 in der hinteren Glasplatte 6 einer Doppelglasplatte 7 auf den Spreizkonus 3 aufgedrückt wird. Im dargestellten Ausführungsbeispiel erfolgt das Aufdrücken des Spreizelementes 5 durch Aufdrehen der Mutter 8 auf den Gewindeabschnitt 4 des Gewindebolzens 2. Beim Aufdrehen der Mutter 8 wird die über das Spreizelement 5 und der Stirnseite des Gewindebolzens 2 gestülpte Kappe 9 aus weichem Kunststoff zwischen dem Spreizelement 5 und der Wandung der Hinterschneidung 10 des Bohrloches 11 verpresst, so dass ein Direktkontakt des aus Stahl bestehenden Spreizelements 5 mit der Glasfläche vermieden ist.

Der Gewindebolzen 2 durchdringt vollständig eine Distanzhülse 12 aus hartem Kunststoff, die mit einem Abschnitt 13 in das Bohrloch 11 der hinteren Glasplatte 6 eingrifft. Durch diesen Abschnitt 13, der einen kleineren Durchmesser als die Distanzhülse 12 aufweist, entsteht eine Schulter 14, mit der die Distanzhülse 12 auf der hinteren Glasplatte aufsitzt. Die Distanzhülse 12 durchdringt vollständig die vordere Glasplatte 15, die ein dem Außendurchmesser der Distanzhülse 12 entsprechendes Bohrloch 16 aufweist. Zur Überdeckung des Bohrloches 16 der vorderen Glasplatte 15 ist an der Distanzhülse 12 ein Flansch 17 angeordnet, der zur Verbesserung der Abdichtung an seiner Unterseite mit einer ringförmigen Dichtungsrippe 18 versehen ist. Der Flansch 17 dient gleichzeitig auch als Auflage für die Mutter 8, um ein Direktkontakt mit der Glasplatte 15 zu vermeiden. Mit dem überstehenden Ende des Gewindebolzens 2 kann die Doppelglasplatte 7 zur Verkleidung einer Gebäudewand an einer Unterkonstruktion befestigt werden (nicht dargestellt).

## Patentansprüche

1. Befestigungselement für Doppelglasplatten (15, 6) bestehend aus einem Gewindebolzen (2) mit einem am vorderen Ende angeordneten Spreizkonus (3), auf den ein ringförmiges Spreizelement (5) zur Verspreizung in einem im Bereich des Bohrlochgrundes eine Hinterschneidung (10) aufweisenden Bohrloch (11) der hinteren Glasplatte aufschiebbar ist, **dadurch gekennzeichnet, dass** über das Spreizelement (5) eine aus weichem Kunststoff bestehende und auf der Stirnseite des Gewindebolzens (2) aufsitzende Kappe (9) gestülpt ist, und dass auf dem Schaft des Gewindebolzens (2) eine auf der hinteren Glasplatte (6) aufsitzende und die vordere Glasplatte (15) durchdringende Distanzhülse (12) aus hartem Kunststoff angeordnet ist, die einen in das Bohrloch (11) der hinteren Glasplatte (6) eingreifenden und das Spreizelement (5) abstützenden Abschnitt (13) aufweist.

2. Befestigungselement nach Anspruch 1, **dadurch gekennzeichnet, dass** die Distanzhülse (12) einen das Bohrloch (16) der vorderen Glasplatte (15) überdeckenden Flansch (17) aufweist.

3. Befestigungselement nach Anspruch 2, **dadurch gekennzeichnet, dass** an der Unterseite des Flansches (17) wenigstens eine ringförmige Dichtungsrippe (18) angeordnet ist.

## Claims

1. Fastening element for double glass panels (15, 6), consisting of a threaded bolt (2) having an expansion cone (3) which is arranged at the forward end and onto which an annular expansion element (5) is arranged to be pushed for expansion in a hole (11) drilled in the rear glass panel and provided with an undercut (10) in the region of the bottom of the drilled hole, **characterised in that** over the expansion element (5) there is placed a cap (9), which is made from soft plastics material and which rests against the end face of the threaded bolt (2); and on the shank of the threaded bolt (2) there is arranged a spacing sleeve (12) of hard plastics material, which rests against the rear glass panel (6) and passes through the front glass panel (15) and which has a portion (13) that engages in the hole (11) drilled in the rear glass panel (6) and provides an abutment for the expansion element (5).

2. Fastening element according to claim 1, **characterised in that** the spacing sleeve (12) has a flange (17) lapping over the hole (16) drilled in the front glass panel (15).

3. Fastening element according to claim 2, **characterised in that** on the underside of the flange (17) there is arranged at least one annular sealing rib (18).

## Revendications

1. Elément de fixation de plaques de double vitrage (15, 6) constitué par un boulon fileté (2) avec un cône d'écartement (3) situé à l'extrémité avant, sur lequel un élément d'écartement annulaire (5) peut être poussé pour l'écartement dans un trou d'alésage (11) de la vitre arrière présentant une contre-dépouille (10) dans la zone du fond du trou d'alésage, **caractérisé en ce que**, au-dessus de l'élément d'écartement (5), un capuchon constitué de plastique souple et reposant sur la face frontale du boulon fileté (2), est embouti par retournement, et que sur la tige du boulon fileté (2), est aménagée une douille d'écartement (12) en plastique dur reposant sur la vitre arrière (6) et traversant la vitre avant (15), qui présente une section en prise avec le trou d'alésage (11) de la vitre arrière (6) et étayant l'élément d'écartement (5).

2. Elément de fixation selon la revendication 1, **caractérisé en ce que** la douille d'écartement (12) présente une collerette (17) recouvrant le trou d'alésage (16) de la vitre avant (15).

3. Elément de fixation selon la revendication 2, **caractérisé en ce que**, au moins une nervure d'étanchéité annulaire (18) est montée sur la face inférieure de la collerette (17).
